(19) Europäisches Patentamt
European Patent Office
Office européen des brevets

(11) Veröffentlichungsnummer: **0 315 749 B1**

(12) **EUROPÄISCHE PATENTSCHRIFT**

(45) Veröffentlichungstag der Patentschrift: **10.08.94**

(51) Int. Cl.5: **C08J 5/12**, B32B 25/08, C08L 23/16

(21) Anmeldenummer: **88114645.0**

(22) Anmeldetag: **08.09.88**

Die Akte enthält technische Angaben, die nach dem Eingang der Anmeldung eingereicht wurden und die nicht in dieser Patentschrift enthalten sind.

(54) **Verfahren zur Herstellung eines chemischen Verbundes zwischen Formmassen auf Basis von Polyphenylenethern einerseits und peroxidvulkanisierten EP(D)M-Kautschuken andererseits.**

(30) Priorität: **07.11.87 DE 3737891**

(43) Veröffentlichungstag der Anmeldung: **17.05.89 Patentblatt 89/20**

(45) Bekanntmachung des Hinweises auf die Patenterteilung: **10.08.94 Patentblatt 94/32**

(84) Benannte Vertragsstaaten: **AT BE CH DE ES FR GB IT LI NL SE**

(56) Entgegenhaltungen:
**EP-A- 0 142 930**
**DE-A- 3 602 705**

**JOURNAL OF APPLIED POLYMER SCIENCE, Bd. 23, 1979, NEW YORK US M.L.RUNGE ET AL.: 'ADHESION OF ELASTOMERS TO RIGID SUBSTRATES - THREE SUBSTRATES WITH UNEXPECTED HIGH ADHESION'**

(73) Patentinhaber: **HÜLS AKTIENGESELLSCHAFT**

**D-45764 Marl (DE)**

(72) Erfinder: **Jadamus, Hans, Dr.**
**Hervester Strasse 8**
**D-4370 Marl (DE)**
Erfinder: **Grosse-Puppendahl, Thomas**
**Stettiner Strasse 10**
**D-4358 Haltern (DE)**
Erfinder: **Richter, Klaus-Peter, Dr.**
**Erlbrüggestrasse 38**
**D-4370 Marl (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung betrifft ein Verfahren zur Herstellung eines festen Verbundes zwischen thermoplastischen Formstoffen auf Basis von Polyphenylenethern einerseits und peroxidvulkanisierten EP(D)M-Kautschuken andererseits sowie die nach diesem Verfahren erhaltenen Gegenstände.

Häufig kann ein einziger Werkstoff nicht alle Eigenschaften beitragen, die von einem Gegenstand verlangt werden. Solche unvereinbaren Eigenschaftskombinationen sind z. B. gleichzeitig hohe Festigkeit und Gummielastizität oder hohe Härte und Steifheit auf einer und Rutschfestigkeit auf der anderen Seite.

Um Bauteile mit Eigenschaften auszurüsten, die ein einziger Werkstoff nicht beitragen kann, setzt man sie aus Teilen verschiedener Werkstoffe zusammen. Für die Funktionstüchtigkeit derartiger Gegenstände ist häufig eine feste Haftung zwischen den Teilen aus den verschiedenen Werkstoffen eine notwendige Voraussetzung.

Das an sich beste Verfahren zur Herstellung derartiger Verbundstoffe besteht darin, den steifen Formstoff und die Kautschukmasse zu covulkanisieren.

So ist es bekannt, daß SBR- und EPR-Kautschuke sowie Polybutadiene nach längerer thermischer Behandlung eine unerwartet hohe Adhäsion an bestimmten Kunststoffen zeigen. Diese Kunststoffe, die sich durch die wiederkehrende Einheit

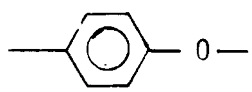

auszeichnen, umfassen Poly(2,6-dimethyl-1,4-phenylen-ether), Polysulfone und Polycarbonate. Bei Polystyrolen, die diese Struktureinheit nicht aufweisen, ist die Adhäsionskraft mehr als 6 mal kleiner (P. Dreyfuss, M. L. Runge, J. Appl. Pol. Sci. 23, 1863 bis 1866). Die Autoren behaupten, daß diese Methode in vielen Fällen einen ausgezeichneten Verbund zwischen der Elastomer- und der Kunststoffschicht liefere, selbst wenn oder gerade wenn das Elastomere, wie im Falle des EPR-Kautschuks, keine Doppelbindungen enthält.

Tatsächlich weist die Methode erhebliche Nachteile auf:

- Die reinen Polyphenylenether spielen wegen ihrer schlechten Verarbeitbarkeit und ihrer unzureichenden Kerbschlagzähigkeit nur eine wirtschaftlich untergeordnete Rolle. Alle PPE-haltigen Polymermischungen enthalten Zusätze von Polymeren, deren Verbundeigenschaften deutlich schlechter sind. Für die wirtschaftlich interessanten Polymermischungen mit einem Anteil von mehr als 10 % Styrolpolymerisaten sollte die beschriebene Methode daher ungeeignet sein.
- Für technische Einsatzzwecke verwendet man füllstoffhaltige Kautschuke, deren Haftungseigenschaften im Vergleich zu den untersuchten füllstoffreien Systemen schlechter sein sollten.
- Von erheblichem Nachteil ist ferner der Umstand, daß die Behandlungszeiten außerordentlich lang sind. Mehrstündige Einwirkungszeiten sind mit einer modernen rationellen Herstellung von Formteilen nicht vereinbar.

Unter diesen Umständen ist es nicht verwunderlich, daß es weder zu einer Weiterentwicklung dieses Verfahrens, noch zu einer industriellen Nutzung gekommen ist.

Schaut man sich das Verfahren trotz dieser Einwände näher an, so stellt man fest, daß es den Autoren darauf ankam, einen physikalischen Verbund zwischen bestimmten Thermoplasten und synthetischen Kautschuken herzustellen. Insbesondere sollte ein kalter Fluß verhindert werden. Ein chemischer Verbund sollte vermieden werden, war doch gefunden worden, daß die Adhäsionskraft mit zunehmendem Vernetzungsgrad des Kautschuks abnimmt (vgl. A. Ahagon, A. N. Gent, J. Polym. Sci.: Polym. Phys. Ed. 13, 1285 (1975) Zusammenfassung).

Fährt man die Versuche nach, so stellt man fest, daß die Haftfestigkeitswerte keineswegs so gut sind, wie dies in dem zitierten Artikel dargestellt ist (siehe Vergleichsversuche in Tabelle 2 der DE-OS 36 02 705). In einzelnen Fällen ist die Trennkraft nicht meßbar, da der Kautschuk im Laufe der thermischen Behandlung krümelig geworden ist.

In neuerer Zeit ist ein sehr interessantes Verfahren zur Herstellung eines chemischen Verbundes zwischen Formmassen auf Basis von Polyphenylenethern (PPE) und bestimmten Doppelbindungen enthaltenden, mit Schwefel vulkanisierbaren Kautschuken entwickelt worden (vgl. DE-OS 36 02 705). Bei diesem Verfahren setzt man SBR-, BR-, IR-, IIR-Kautschuke und deren Verschnitte ein. Schließlich ist es auch möglich, Kautschukmischungen zu verwenden, die zusätzlich in bestimmten Anteilen CIIR-, NR-, CR- und NBR-Kautschuke enthalten können.

Die erzielten Haftfestigkeitswerte sind beachtlich; allerdings läßt die Bestandigkeit der eingesetzten Kautschukmaterialien gegenüber Lösemitteln ebenso zu wünschen übrig wie ihre Stabilität bei Bewitterung.

Grundsätzlich könnte man daran denken, andere Doppelbindungen enthaltende Kautschuke bei diesem Verfahren einzusetzen, die bekannterweise diesen Anforderungen besser gerecht werden. Es hat sich jedoch gezeigt, daß beispielsweise EPDM-Kautschuke unter den als wesentlich erkannten Verfahrensbedingungen keine ausreichenden Haftungswerte aufweisen. Es erschien daher nicht möglich, Verbunde zwischen Polyphenylenethern einerseits und Kautschuken andererseits herzustellen, die ausreichende Haftungseigenschaften mit guter Beständigkeit gegenüber Lösemitteln und Bewitterung verbinden.

Es wurde jetzt überraschend ein Verfahren gefunden, mit dem dies doch möglich ist. Dieses besteht darin, daß man von einer Kautschukzusammensetzung ausgeht, die

- 100 Gewichtsteile einer Mischung aus 20 bis 100 % eines EP(D)M-Kautschukes und 80 bis 0 % eines durch Emulsionspolymerisation erhaltenen Styrol-Butadien-Kautschukes,
- 100 bis 300 Gewichtsteile Zuschlagsstoffe,
- 1 bis 10 Gewichtsteile peroxidische Vulkanisationsmittel,
- 0,5 bis 4 Gewichtsteile Vulkanisationsaktivatoren und
- gegebenenfalls Verstreckungsmittel enthält

und den Verbund durch Covulkanisation einer PPE-haltigen thermoplastischen Formmasse mit der Kautschukzusammensetzung herstellt.

Eine Ausführungsform dieses Verfahrens ist dadurch gekennzeichnet, daß die Kautschukzusammensetzung als Kautschukbestandteil ausschließlich EPM-und/oder EPDM-Kautschuk enthält.

In einer weiteren Ausführungsform enthält die thermoplastische Formmasse

a) 100 Gewichtsteile PPE,
b) 0 bis 20 Gewichtsteile Polyalkenylene,
c) 0 bis 100 Gewichtsteile Styrolpolymerisate und
d) gegebenenfalls weitere Zusatzstoffe.

Als Polyalkenylene werden hierbei bevorzugt Polyoctenylene in einer Menge von 5 bis 15 Gewichtsteilen eingesetzt.

Gegenstand der Erfindung sind ferner die nach dem anspruchsgemäßen Verfahren erhaltenen Covulkanisate.

Das erfindungsgemäße Verfahren zeichnet sich durch folgende Vorteile aus:

1. Es können nicht nur Polyphenylenether, sondern generell Polystyrole und Kohlenwasserstoffe enthaltende PPE-Formmassen eingesetzt werden.
2. Der Verbund ist vorzugsweise in wenigen Minuten hergestellt.
3. Der im Verbundsystem eingesetzte Kautschuk ist problemlos auch im Außenbereich einsetzbar.

Im folgenden soll zunächst die Zusammensetzung der PPE-haltigen Formmassen mit ihren Komponenten

a) PPE,
b) Polyalkenylene,
c) Styrolpolymerisate,
d) Zusatzstoffe

beschrieben werden.

Als Polyphenylenether a) kommen Polymere auf Basis substituierter Phenole der allgemeinen Formel

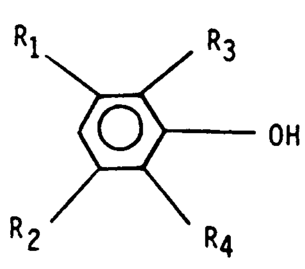

infrage. $R_1$ und $R_2$ bedeuten unabhängig voneinander einen Methylrest oder vorzugsweise Wasserstoff. Entweder steht $R_3$ für Wasserstoff und $R_4$ für einen tertiären Alkylrest mit bis zu 6 C-Atomen, wie z. B. den tertiären Butylrest, oder $R_3$ und $R_4$ haben unabhängig voneinander jeweils die Bedeutung eines n-Alkylrestes mit bis zu 6 C-Atomen. Vorzugsweise wird 2,6-Dimethylphenol verwendet. Selbstverständlich können auch Gemische der hier aufgeführten monomeren Phenole eingesetzt werden. Ganz besonders

bevorzugt werden Poly(2,6-dimethyl-1,4-phenylenether) mit einer Grenzviskosität zwischen 0,4 und 0,7 ml/g (gemessen in Chloroform bei 25 °C).

Die Polyphenylenether können z. B. in Gegenwart von komplexbildenden Mitteln, wie Kupferbromid und Morpholin, aus 2,6-Dimethylphenol hergestellt werden (vgl. DE-OSS 32 24 692 und 32 24 691). Sie werden üblicherweise als Pulver oder Granulat eingesetzt.

Die Polyalkenylene b) werden durch ringöffnende bzw. ringerweiternde Polymerisation von Cycloalkenen hergestellt (siehe K. J. Ivin, T. Sagusa "Ring-opening Polymerization", Vol. 1, Elsevier Appl. Sci. Publishers, London, insbesondere Seiten 121 bis 183 (1984).

Bevorzugt werden Polyoctenylene (vgl. A. Dräxler, Kautschuk + Gummi, Kunststoff 1981, Seiten 185 bis 190). Polyoctenylene mit unterschiedlichen Anteilen an cis- und trans-Doppelbindungen sowie unterschiedlichen J-Werten und dementsprechend unterschiedlichen Molekulargewichten sind nach literaturbekannten Methoden erhältlich. Bevorzugt werden Polyoctenylene mit einer Viskositätszahl von 50 bis 350 ml/g, vorzugsweise 80 bis 160 ml/g, bestimmt an einer 0,1 %igen Lösung in Toluol. 55 bis 95 %, vorzugsweise 75 bis 85 %, der Doppelbindungen liegen in der trans-Form vor.

Formmassen auf Basis von Polyphenylenethern und Polyoctenylenen werden in den deutschen Offenlegungsschriften 34 36 780 und 34 42 273 beschrieben.

Als Komponente c) können Styrolhomopolymerisate und/oder schlagzähe Styrolpolymerisate eingesetzt werden. Es wird in diesem Zusammenhang auf die DE-OS 36 02 705 verwiesen.

Die PPE-Formmassen enthalten gegebenenfalls weitere Zusatzstoffe d) wie Stabilisatoren, Verarbeitungshilfsmittel, Treibmittel und Metallfasern, Ruß, Graphit und Metallflitter, Titandioxid und Zinksulfid. Der Anteil der Verstärkungsmittel im PPE-Werkstoff kann bis zu 50 %, der der Flammschutzmittel bis zu 15 % und der aller übrigen Zusatzstoffe insgesamt bis zu 5 %, jeweils bezogen auf die gesamte Formmasse, betragen.

Als Flammschutzmittel sind besonders aromatische Phosphorverbindungen, wie Triphenylphosphinoxid und Triphenylphosphat, geeignet. Bezüglich Einzelheiten wird auf die DE-OS 36 02 705 verwiesen.

Geeignete Stabilisatoren umfassen organische Phosphite, wie z. B. Didecylphenylphosphit und Trilaurylphosphit, sterisch gehinderte Phenole sowie Tetramethylpiperidin-, Benzophenon- und Triazolderivate.

Vorzugsweise werden die PPE-Formmassen durch Vermischung der Komponenten im geschmolzenen Zustand hergestellt. Man schmilzt zumindest eine Komponente auf und vermischt die erhaltene Schmelze mit den übrigen Komponenten. Eine andere Möglichkeit besteht darin, alle Komponenten gemeinsam aufzuschmelzen und zu vermischen. Vorzugsweise werden Schmelztemperaturen von 250 bis 350 °C, insbesondere von 260 bis 300 °C, und Verweilzeiten von 0,3 bis 10 Minuten, insbesondere von 0,5 bis 3 Minuten, angewendet. Für das Schmelzen und Vermischen eignen sich übliche Geräte zur Behandlung von hochviskosen Schmelzen, sowohl im absatzweisen als auch im kontinuierlichen Betrieb. Besonders geeignet sind Doppelschneckenkneter und Kokneter.

Es ist aber auch möglich, die PPE-Formmassen statt durch Compoundieren auf andere Weise, z. B. durch Fällen aus dem Lösungsgemisch der Komponenten, herzustellen. Als gemeinsames Lösemittel eignet sich z. B. Toluol, als Fällungsmittel z. B. Methanol. Das Polymerengemisch kann auch durch Verdampfen des Lösemittels z. B. gemäß der DE-OS 33 37 629 gewonnen werden.

Die im erfindungsgemäßen Verfahren eingesetzte Kautschukzusammensetzung enthält folgende Komponenten:

100 Gewichtsteile einer Mischung aus 20 bis 100 % eines EP(D)M-Kautschukes und 80 bis 0 % eines durch Emulsionspolymerisation erhaltenen Styrol-Butadien-Kautschukes,

100 bis 300 Gewichtsteile Zuschlagsstoffe,

1 bis 10 Gewichtsteile peroxidische Vulkanisationsmittel,

0,5 bis 4 Gewichtsteile Vulkanisationsaktivatoren und

gegebenenfalls Verstreckungsmittel.

Der EPM-Kautschuk wird in bekannter Weise durch Polymerisation eines Gemisches aus 25 - 75 % Ethylen und 75 - 25 % Propylen in Gegenwart eines Ziegler-Natta-Katalysators, wie z. B. Diethylaluminiumchlorid, hergestellt.

Der EPDM-Kautschuk wird in analoger Weise durch Polymerisation eines Gemisches aus

mehr als 25 % Ethylen,

mehr als 25 % Propylen und

1 - 10 %, insbesondere 1 bis 3 %, eines Diens hergestellt. Dieses Dien sollte nicht konjugiert sein. Man bevorzugt Bicyclo(2.2.1)-heptadien, Hexadien-1,4, Dicyclopentadien und insbesondere 5-Ethylidennorbornen. Geeignete EP(D)M-Kautschuke werden von den Bunawerken Hüls GmbH, D-4370 Marl unter der Bezeichnung BUNA$^R$ AP hergestellt.

Die Herstellung der aufgeführten Kautschuktypen erfolgt nach literaturbekannten Methoden (vgl. W. Hofmann, Kautschuktechnologie, Gentner-Verlag, Stuttgart, 1980).

Die Styrol-Butadien-Kautschuke enthalten üblicherweise 18 bis 40 Gewichtsprozent Styrol. Auch ölgestreckte Typen sind geeignet. Der Kautschuk kann in Ballenform vorliegen. Für die Verarbeitung ist es jedoch günstiger, von einem pulverförmigen, füllstoffhaltigen Kautschuk auszugehen.
E-SBR-Kautschuk wird bekannterweise durch Polymerisation von 15 bis 40 Gewichtsprozent Styrol und entsprechend 85 bis 60 % Butadien in Emulsion hergestellt. Ein solcher Kautschuk wird beispielsweise in der Werkzeitschrift BUNA$^R$ EM Nr. 601 der Bunawerke Hüls GmbH, Ausgabe September 1982, beschrieben. Seine Mooney-Viskosität $ML_{(1+4)}$, 100 °C, liegt zwischen 30 und 120 (vgl. Mooney, Rubber Chem. Techn. 30, 460 (1957).

Besonders bevorzugt ist ein pulverförmiger, füllstoffhaltiger E-SBR-Kautschuk. Es gibt eine Reihe unterschiedlicher Verfahren zur Herstellung pulverförmiger, füllstoffhaltiger Kautschuke. Viele Prozesse sind jedoch so langwierig und umständlich, daß sie keine praktische Bedeutung erlangt haben. In jüngerer Zeit wurde erstmalig ein Verfahren in die industrielle Praxis überführt. (vgl. DE-OS 28 22 148 ) Dieses Verfahren zeichnet sich dadurch aus, daß man die Kautschukkomponente in gelöster Form mit einer wäßrigen Füllstoff-Suspension vereinigt, die ein wasserlösliches Aluminiumsalz und Wasserglas enthält.
Entscheidend ist, daß nicht nur die wäßrige Füllstoff- Dispersionen einen pH-Wert von 3,0 bis 3,7 aufweist, sondern daß man bei der Vereinigung dieser Dispersion mit der Kautschukkomponente soviel Mineralsäure zusetzt, daß in der erhaltenen Mischung ebenfalls dieser pH-Bereich eingehalten wird.

Als Zuschlagsstoffe eignen sich alle für EP(D)M- und E-SB-Kautschuke üblichen, pulverförmigen anorganischen Füllstoffe wie Ruß, Kieselsäure, Silikate und Calciumcarbonat sowie Zinkoxid und Stearinsäure.

Geeignete Verstreckungsmittel sind Weichermacheröle, insbesondere naphthenische Öle, in einer Menge von vorzugsweise bis zu 150 Gewichtsteilen, bezogen auf 100 Gewichtsteile Kautschuk.

Geeignete peroxidische Vulkanisationsmittel sind die dem Fachmann zur Vernetzung von EP(D)M-Kautschuken bekannten Peroxide wie z. B. 2,5-Dimethyl-2,5-bis(tert. butylperoxy)hexan, Dicumylperoxid, 4,4-Di-tert.-butylperoxy-n-butylvalerat, 1,1-Di-tert.butylperoxy-3,3,5,-trimethylcyclohexan und insbesondere Bis(tert.butylperoxyisopropyl)benzol. Einzelheiten zum Einsatz von peroxidischen Vulkanisationsmitteln in EP(D)M-Kautschuken sind der Firmenbroschüre "Rubbery Chemicals-Crosslinking Peroxides" der Akzo-Chemie (Erscheinungsdatum: April 1985) zu entnehmen.

Als Vulkanisationsaktivatoren eignen sich beispielsweise Triallylcyanurat (TAC) und Acrylate wie Butandiol-1,4-dimethacrylat (BDMA) und Trimethylolpropantrimethacrylat (TRIM). Bevorzugt werden TAC und/oder BDMA.

Das Verfahren der Covulkanisation

Die Fertigung der aus steifen und gummielastischen Formstoffen zusammengesetzten Formteile kann ein- oder zweistufig erfolgen.
Beim zweistufigen Verfahren wird ein Formteil aus dem PPE-Werkstoff, das durch Pressen, Spritzgießen oder Extrudieren hergestellt wurde, mit der ggf. vorgeformten Kautschukmasse beaufschlagt und den Vulkanisationsbedingungen des Kautschuks ausgesetzt. Das Beaufschlagen des steifen Formteils mit dem Kautschuk kann durch Pressen, Spritzgießen oder Extrudieren geschehen, wobei die Auswahl des Kautschuks bezüglich der Masseviskosität sich nach dem gewählten Formgebungsverfahren richten muß.

Beim zweistufigen Spritzgießverfahren geht man ähnlich wie bei der zweistufigen Herstellung von Zweifarbenspritzteilen vor. Als Einlegeteil verwendet man ein Formteil aus dem PPE-Werkstoff. Zylinder und Schnecke der Spritzgießmaschine sind in bekannter Weise für die Kautschukverarbeitung ausgelegt und das Werkzeug auf Vulkanisationstemperatur beheizbar.

Die optimalen Covulkanisationsbedingungen hängen von der gewählten Kautschukmischung, insbesondere ihrem Vulkanisationssystem, und der Formteilgestaltung ab. Bezüglich Einzelheiten wird auf das Buch von W. Hofmann a. a. O. Seite 255 ff. verwiesen. In diesem Buch sind auch die bevorzugt verwendeten Abmischungen der Dien-Kautschuke mit Stearinsäure, Zinkoxid, Füllstoffen, Weichmacherölen sowie Vulkanisationsaktivatoren angegeben.

Geeignete Massetemperaturen der Kautschukmischung im Zylinder liegen im Bereich zwischen 40 und 80, vorzugsweise zwischen 60 und 75 °C.

Geeignete Werkzeugtemperaturen liegen zwischen 140 und 200 °C, bevorzugt zwischen 150 und 180 °C. Bei Verwendung von PPE-Werkstoffen, die hohe Anteile an Styrolharzen oder die Formbeständigkeit in der Wärme erniedrigende Brandschutzmittel enthalten, wählt man Temperaturen im unteren Teil der angegebenen Bereiche.

Die Vulkanisationszeiten liegen zwischen 30 Sekunden und 15 Minuten, vorzugsweise zwischen 5 und 10 Minuten.
Beim Beaufschlagen und Ausvulkanisieren nach dem zweistufigen Extrusionsverfahren wird z. B. ein in der ersten Stufe hergestelltes Profil aus einem PPE-Werkstoff, z. B. ein Rohr, mit der Kautschukmasse ummantelt und gegebenenfalls unter Druck ausvulkanisiert. Entsprechend verfährt man mit Platten, Vliesen, Geweben, Seilen usw. aus PPE-Werkstoffen.

Beim einstufigen Spritzgießverfahren arbeitet man analog zu dem einstufigen Zweifarbenspritzgießverfahren. In diesem Fall ist eine Spritzgießmaschine für die Thermoplastverarbeitung, die andere für die Kautschukverarbeitung ausgerüstet. Das Werkzeug wird auf die vorgegebene Vulkanisiertemperatur aufgeheizt, die unter der Erstarrungstemperatur des PPE-Werkstoffes liegen sollte.

Aus den covulkanisierbaren Massen lassen sich beispielsweise folgende Gegenstände herstellen:
Brems- und Kupplungsscheiben, gummibeschichtete Walzen; Flansche, Rohr- und Schlauchkupplungen, Armaturenteile; Gehäuse für Pumpen und elektrisch betriebene Werkzeuge, Lampengehäuse; Manschetten, Dichtungsrahmen; stoß- und strahlungsabsorbierende Bauteile; Federelemente; PPE-verstärkte Gummiprofile; Transportbänder, Antriebsriemen, Fahrzeugreifen; Andruckrollen für Video- und Audio-Band-Geräte; Gleiskettenglieder.

Beispiele:

1. PPE-Formmassen
1.1 Poly(2,6-dimethyl-1,4-phenylenether) mit einem J-Wert von 68 ml/g.
Den Polyphenylenether erhält man durch oxidative Kupplung von 2,6-Dimethylphenol, Abstoppung der Reaktion und anschließende Reaktionsextraktion gemäß DE-OSS 33 13 864 und 33 23 777. Das Lösemittel wird durch Abdampfen entfernt und die Schmelze über einen Entgasungsextruder extrudiert und anschließend granuliert.
1.2 Ein Polymerengemisch, bestehend aus
90 Gewichtsteilen Poly(2,6-dimethyl-1,4-phenylenether) und
10 Gewichtsteilen Polyoctenylen.

Es wird ein Polyoctenylen mit einem J-Wert von 120 ml/g und einem trans-Gehalt von 80 % eingesetzt. Ein solches Produkt ist unter dem Namen VESTENAMER[R] 8012 im Handel erhältlich (Hersteller: HÜLS AKTIENGESELLSCHAFT, D-4370 Marl 1). Weitere Kenndaten dieses Produktes sind der Zeitschrift "Kautschuk, Gummi, Kunststoffe" 1981, Seiten 195 bis 190, sowie dem hüls-Merkblatt Nr. 2247 "VESTENAMER 8012" zu entnehmen. Das Polyoctenylen kann beispielsweise auch nach K. J. Ivin "Olefin Metathesis", Academic Press, Seiten 236 ff., 1983, und den dort angegebenen weiteren Literaturstellen hergestellt werden.

Analog zu Beispiel 1.1 wird ein Polyphenylenether mit einem J-Wert von 45 ml/g hergestellt und mit dem Polyoctenylen in Toluol vereinigt. Die Gewinnung des PPE-Werkstoffs erfolgt wie in Beispiel 1.1 beschrieben.
1.3 Ein Polymerengemisch bestehend aus
78 Gewichtsteilen Poly(2,6-dimethyl-1,4-phenylenether)
und 22 Gewichtsteilen schlagzäh modifiziertem Polystyrol.

Als schlagfestes Styrolpolymerisat wird VESTYRON[R] 616 der Fa. HÜLS AKTIENGESELLSCHAFT, D-4370 Marl, eingesetzt. Die Kenndaten dieses Produktes sind der Broschüre "Kunststoffe von hüls, VESTYRON", Ausgabe September 1979, zu entnehmen.

Den Polyphenylenether mit einem J-Wert von 50 ml/g erhält man durch oxidative Kupplung von 2,6-Dimethylphenol, Abstoppung der Reaktion und anschließende Reaktionsextraktion gemäß DE-OSS 33 13 864 und 33 32 377. Gemäß deutscher Patentanmeldung P 33 27 629 wird eine Mischung aus diesem Polyphenylenether und dem kautschukmodifizierten Polystyrol im Massenverhältnis 78 : 22 hergestellt.
1.4 Ein Polymerengemisch bestehend aus
60 Gewichtsteilen Poly(2,6-dimethyl-1,4-phenylenether)
30 Gewichtsteilen schlagfest modifiziertem Polystyrol
10 Gewichtsteilen Polyoctenylen
Man verwendet VESTYRON[R] 616 als schlagfest modifiziertes Polystyrol und VESTENAMER[R] 8012 als Polyoctenylen und verfährt wie im Beispiel 1.3.
1.5 Ein Polymerengemisch bestehend aus
60 Gewichtsteilen Poly(2,6-dimethyl-1,4-phenylenether)
30 Gewichtsteilen Styrolhomopolymerisat und
10 Gewichtsteilen Polyoctenylen

Als Styrolhomopolymerisat wird VESTYRON$^R$ 114, ein Produkt der Fa. HÜLS AKTIENGESELLSCHAFT, D-4370 Marl, eingesetzt. Die Kenndaten dieses Produktes sind der Broschüre "Kunststoffe von hüls, VESTYRON, Ausgabe September 1983, zu entnehmen.
Im übrigen verfährt man wie im Beispiel 1.4

1.6 Ein Polymerengemisch aus
52 Gewichtsteilen Poly(2,6-dimethyl-1,4-phenylenether)
und 48 Gewichtsteilen schlagzäh modifiziertem Polystyrol
Man verfährt analog zu Beispiel 1.3.

2. Kautschuke

2.1 BUNA$^R$ AP 437
2.2 BUNA$^R$ AP 341
2.3 BUNA$^R$ AP 301

Es handelt sich um Produkte der Bunawerke Hüls GmbH in D-4370 Marl. Die Eigenschaften dieser Produkte sind der Produktinformation "BUNA AP", Dezember 1980 zu entnehmen.

2.4 BUNA$^R$ EM 1500

Es handelt sich um einen durch Polymerisation in Emulsion erhaltenen Styrol-Butadien-Kautschuk der Bunawerke Hüls GmbH in D-4370 Marl. Die Eigenschaften
dieses Produktes sind der Firmenbroschüre "BUNA EM", 4. Auflage (September 1982) zu entnehmen.

Zur Demonstration der Verbundwirkung werden Probekörper hergestellt, indem man gemäß DIN 53 531 T1 aus dem thermoplastischen PPE-haltigen Polymer eine Kunststoffplatte herstellte, diese zu etwa einem Drittel mit einer Teflonfolie abdeckte, auf die Platte ein passendes Kautschukfell legte, den Verbund nach dem Preßverfarhen herstellte und schließlich Probekörper mit einer Breite von 25 mm aussägte.

Die Zusammensetzung der Kautschuke ist Tabelle 1 zu entnehmen. In Tabelle 2 sind die Versuchsergebnisse aufgetragen. Die experimentellen Daten der Tabelle 2 beziehen sich ausschließlich auf den PPE-Werkstoff 1.2. Hohe Haftfestigkeiten und gute Lösemittelbeständigkeiten werden aber auch mit den übrigen PPE-Werkstoffen erzielt.

Tabelle 1: Bestandteile der Kautschuk-Zusammensetzungen 3.1 bis 3.9 (Angaben in Gewichtsteilen)

| Beispiel | 3.1 | 3.2 | 3.3 | 3.4 | 3.5 | 3.6 | 3.7 | 3.8 | 3.9 |
|---|---|---|---|---|---|---|---|---|---|
| Kautschuk 2.1 | 100 | - | - | - | - | - | - | - | - |
| Kautschuk 2.2 | - | 100 | 100 | 100 | - | 70 | 30 | 100 | 100 |
| Kautschuk 2.3 | - | - | - | - | 100 | - | - | - | - |
| Kautschuk 2.4 | - | - | - | - | - | 30 | 70 | - | - |
| Zinkoxid 1) | 5 | 5 | 5 | 5 | 5 | 5 | 5 | 5 | 5 |
| Aluminiumsilikat 2) | 140 | 140 | 140 | 140 | 140 | 140 | 140 | 140 | 50 |
| Juraperle 10 H 3) | 60 | 60 | 60 | 60 | 60 | 60 | 60 | 60 | - |
| Öl 4) | 50 | 50 | 80 | 50 | 50 | 50 | 50 | 50 | 30 |
| ULTRASIL® VN 2 5) | - | - | - | - | - | - | - | - | 40 |
| Silane A 172 6) | 1.5 | 1.5 | 1.5 | - | 1.5 | 1.5 | 1.5 | 1.5 | 1.5 |
| VULKANOX® HS 7) | 1.5 | 1.5 | 1.5 | 1.5 | 1.5 | 1.5 | 1.5 | 1.5 | 1.5 |
| DUREX® O 8) | - | - | - | - | - | - | - | 3.0 | - |
| TAC 9) | 1.0 | 1.0 | 1.0 | 1.0 | 1.0 | 1.0 | 1.0 | 1.0 | 1.0 |
| Perkadox 14/40 10) | 7.5 | 7.5 | 7.5 | 7.5 | 7.5 | 7.5 | 7.5 | 7.5 | 7.5 |

Erläuterungen zu Tabelle 1:

1) Das eingesetzte Zinkoxid wies einen Reinheitsgrad von mehr als 99 % auf. Die Teilchengröße betrug 0,8 bis 1,0 mm.

2) Als Aluminiumsilikat wird kombinierter China-Clay, Typ POLESTAR[R] 200 R, der Firma ECC International. St. Austell, Cornwall, Großbritannien eingesetzt. Die Eigenschaften des Produktes sind der Firmenbroschüre zu entnehmen.
3) Juraperle 10 H ist ein Füllstoff der Fa. Wingertsberg Füllstoff-und Kreidewerk GmbH, Köln-Bayental.
4) Als paraffinisches Öl kam Sunpar 150, ein Produkt der Fa. Sunoil Co. Belgien LV, Antwerpen, zur Anwendung.
5) Es wurde ULTRASIL[R] VN2, eine hochaktive Kieselsäure eingesetzt. Dieses Produkt ist erhältlich bei der Füllstoff-Gesellschaft, Marquart-Wesseling GmbH, D-5047 Wesseling.
6) Silane A 172 ist der Handelsname für Vinyl-tris-(2-methoxyethoxy)silan.
7) Es wurde VULCANOX[R] HS, ein Alterungsschutzmittel der Bayer AG, Leverkusen, einsetzt. Es handelt sich um 2,2,4-Trimethyl-1,2-dihydrochinolin.
8) Es wurde DUREX[R] O, ein halb verstärkender Gasruß der Firma Degussa, Hanau eingesetzt.
9) TAC (Triallylcyanurat) ist ein Produkt der Firma Degussa, Hanau.
10) Perkadox 14/40 ist ein Produkt der Firma Akzo-Chemie.

Tabelle 2: Eigenschaften der erfindungsgemäßen Verbundwerkstoffe (Die Vulkanisationstemperatur betrug jeweils 180 °C, die Vulkanisationszeit 15 Minuten)

| Kautschuk | PPE-Werkstoff | Haftkraft in N | Trennkraft in N/mm | Trennart |
|---|---|---|---|---|
| 3.1 | 1.2 | 268 | 10.7 | kohäsiv |
| 3.2 | 1.2 | 295 | 11.8 | kohäsiv |
| 3.3 | 1.2 | 315 | 12.6 | kohäsiv |
| 3.4 | 1.2 | 465 | 18.6 | kohäsiv |
| 3.5 | 1.2 | 313 | 12.5 | kohäsiv |
| 3.6 | 1.2 | 315 | 12.6 | kohäsiv |
| 3.7 | 1.2 | 243 | 9.7 | kohäsiv |
| 3.8 | 1.2 | 265 | 10.6 | kohäsiv |
| 3.9 | 1.2 | 280 | 11.2 | kohäsiv |

**Patentansprüche**

**1.** Verfahren zur Herstellung eines Verbundes zwischen einem thermoplastischen PPE-haltigen Polymer und einem Kautschuk durch thermische Behandlung in Gegenwart eines Vulkanisationssystems,
dadurch gekennzeichnet,
daß man von einer Kautschukzusammensetzung ausgeht, die
- 100 Gewichtsteile einer Mischung aus 20 bis 100 % eines EP(D)M-Kautschukes und 80 bis 0 % eines durch Emulsionspolymerisation erhaltenen Styrol-Butadien-Kautschukes,
- 100 bis 300 Gewichtsteile Zuschlagsstoffe,
- 1 bis 10 Gewichtsteile peroxidische Vulkanisationsmittel,
- 0,5 bis 4 Gewichtsteile Vulkanisationsaktivatoren und
- gegebenenfalls Verstreckungsmittel enthält

und den Verbund durch Covulkanisation der PPE-haltigen thermoplastischen Formmasse mit der Kautschukzusammensetzung herstellt.

**2.** Verfahren gemäß Anspruch 1,
dadurch gekennzeichnet,

daß die Kautschukzusammensetzung als Kautschukbestandteil ausschließlich EPM- und/oder EPDM-Kautschuk enthält.

**3.** Verfahren gemäß den Ansprüchen 1 und 2,
dadurch gekennzeichnet,
daß die thermoplastische Formmasse
a) 100 Gewichtsteile PPE,
b) 0 - 20 Gewichtsteile Polyalkenylene,
c) 0 - 100 Gewichtsteile Styrolpolymerisate und
d) gegebenenfalls weitere Zusatzstoffe
enthält.

**4.** Verfahren gemäß Anspruch 3,
dadurch gekennzeichnet,
daß die thermoplastische Formmasse 5 - 15 Gewichtsteile Polyoctenylene enthält.

**5.** Verfahren gemäß den Ansprüchen 1 bis 4,
dadurch gekennzeichnet,
daß man als Zuschlagsstoffe der Kautschukzusammensetzung Zinkoxid, Ruß, Kieselsäure, Calciumcarbonat und/oder Aluminiumsilikate verwendet.

**6.** Verfahren gemäß den Ansprüchen 1 bis 5,
dadurch gekennzeichnet,
daß die Kautschukzusammensetzung bis zu 150 Gewichtsteile Weichmacheröle enthält.

**7.** Verfahren gemäß den Ansprüchen 1 bis 6,
dadurch gekennzeichnet,
daß man die Covulkanisation bei Temperaturen zwischen 140 und 200 °C in 30 Sekunden bis 15 Minuten, vorzugsweise bei 150 bis 180 °C in 5 bis 10 Minuten durchführt.

**8.** Covulkanisate, erhalten nach den Ansprüchen 1 bis 7.

**Claims**

**1.** A process for the production of a bond between a thermoplastic, PPE-containing polymer and a rubber by thermal treatment in the presence of a vulcanization system, characterized in that the starting material is a rubber composition comprising
- 100 parts by weight of a mixture of from 20 to 100% of an EP(D)M rubber and from 80 to 0% of a styrene-butadiene rubber obtained by emulsion polymerization,
- from 100 to 300 parts by weight of additives,
- from 1 to 10 parts by weight of peroxidic vulcanizing agents,
- from 0.5 to 4 parts by weight of vulcanization activators and
- if desired extenders,

and the bond is produced by covulcanization of the PPE-containing thermoplastic moulding composition with the rubber composition.

**2.** A process according to claim 1, characterized in that the rubber composition contains exclusively EPM and/or EPDM rubber as rubber constituent.

**3.** A process according to either of claims 1 and 2, characterized in that the thermoplastic moulding composition comprises
a) 100 parts by weight of PPE,
b) 0 - 20 parts by weight of polyalkenylenes,
c) 0 - 100 parts by weight of styrene polymers and
d) if desired further additives.

**4.** A process according to claim 3, characterized in that the thermoplastic moulding composition contains 5-15 parts by weight of polyoctenylenes.

**5.** A process according to any of claims 1 to 4, characterized in that the additives used in the rubber composition are zinc oxide, carbon black, silicic acid, calcium carbonate and/or aluminium silicates.

**6.** A process according to any of claims 1 to 5, characterized in that the rubber composition contains up to 150 parts by weight of plasticizer oils.

**7.** A process according to any of claims 1 to 6, characterized in that the covulcanization is carried out at temperatures of from 140 to 200 °C for from 30 seconds to 15 minutes, preferably at from 150 to 180 °C for from 5 to 10 minutes.

**8.** A covulcanizate obtained according to any of claims 1 to 7.

**Revendications**

**1.** Procédé de préparation d'un compound entre un polymère thermoplastique renfermant un éther polyphénylénique et un caoutchouc, par traitement thermique en présence d'un système de vulcanisation,
caractérisé par le fait que l'on part d'une composition caoutchouteuse qui renferme
- 100 parties en poids d'un mélange constitué par 20 à 100 % d'un caoutchouc EP(D)M et par 80 à 0 % d'un caoutchouc de styrène et de butadiène obtenu par polymérisation en émulsion,
- 100 à 300 parties en poids de substances additionnelles,
- 1 à 10 parties en poids d'agents de vulcanisation peroxydiques,
- 0,5 à 4 parties en poids d'activants de vulcanisation et
- le cas échéant des agents d'étirage,
puis prépare le compound par co-vulcanisation, avec la composition caoutchouteuse, de la masse à mouler thermoplastique renfermant l'éther polyphénylénique.

**2.** Procédé selon la revendication 1,
caractérisé par le fait que la composition caoutchouteuse renferme, en tant que constituant caoutchouteux, exclusivement un mélange de caoutchouc EPM et/ou de caoutchouc EPDM.

**3.** Procédé selon les revendications 1 et 2,
caractérisé par le fait que la masse à mouler thermoplastique renferme
a) 100 parties en poids d'éther polyphénylénique,
b) 0 à 20 parties en poids de poly-alkénylènes,
c) 0 à 100 parties en poids de produits de polymérisation du styrène et
d) le cas échéant d'autres additifs.

**4.** Procédé selon la revendication 3,
caractérisé par le fait que la masse à mouler thermoplastique renferme de 5 à 15 parties en poids de poly-octénylènes.

**5.** Procédé selon les revendications 1 à 4,
caractérisé par le fait que l'on utilise, comme substances additionnelles de la composition caoutchouteuse, de l'oxyde de zinc, du noir de fumée, de l'acide silicique, du carbonate de calcium et/ou des silicates d'aluminium.

**6.** Procédé selon les revendications 1 à 5,
caractérisé par le fait que la composition caoutchouteuse renferme jusqu'à 150 parties en poids d'huiles plastifiantes.

**7.** Procédé selon les revendications 1 à 6,
caractérisé par le fait que l'on effectue la co-vulcanisation à des températures comprises entre 140 et 200 °C, en 30 secondes à 15 minutes, de préférence à une température de 150 à 180 °C en 5 à 10 minutes.

**8.** Les co-vulcanisats obtenus selon les revendications 1 à 7.